# EUROPÄISCHE PATENTANMELDUNG

(11) **EP 2 065 424 A1**
(43) Veröffentlichungstag der Anmeldung: **03.06.2009**
(21) Anmeldenummer: 08169604.9
(22) Anmeldetag: 21.11.2008
(51) Int. Cl.: C08G 65/00

(54) **Verfahren zur Herstellung von Polyetheralkoholen mit DMC-Katalysatoren unter Verwendung von SiH-Gruppen tragenden Verbindungen als Additive**

(30) Priorität: 28.11.2007 DE 102007057145
(71) Anmelder: Evonik Goldschmidt GmbH, 45127 Essen (DE)
(72) Erfinder: Knott, Dr. Wilfried, 45355, Essen (DE); Schubert, Dr. Frank, 47506, Neukirchen-Vluyn (DE)

(57) **Zusammenfassung**

Verfahren zur Herstellung von Polyetheralkoholen durch Polymerisation mittels Doppelmetallcyanid-Katalysatoren (DMC-Katalysatoren), dadurch gekennzeichnet, dass dem Reaktionsgemisch vor oder während der Polymerisation ein oder mehrere, gegebenenfalls gemischte Additive bestehend aus Verbindungen mit einem oder mehreren hydridischen Wasserstoffatomen gebunden an einem Siliziumatom, zugegeben werden.

## Beschreibung

Die Erfindung betrifft ein Verfahren zur Steuerung der Molmassenverteilung in der Alkoxylierung von Hydroxylverbindungen mit Epoxidmonomeren mittels Doppelmetallcyanid-Katalysatoren unter Einsatz spezieller Wasserstoffsiloxane und Silane als Additive, die mindestens ein direkt am Siliziumatom gebundenes hydridisches Wasserstoffatom aufweisen.

Polyetheralkohole, oft auch kurz und synonym verwendet einfach als Polyether oder Polyetherole bezeichnet, sind seit langem bekannt und werden in großen Mengen technisch hergestellt und dienen unter Anderem durch Umsetzung mit Polyisocyanaten als Ausgangsverbindungen zur Herstellung von Polyurethanen oder aber auch zur Herstellung von Tensiden. Die meisten Verfahren zur Herstellung von Alkoxylierungsprodukten (Polyethern) bedienen sich basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Durch Umlagerung von Propylenoxid in Allylalkohol, der seinerseits als Kettenstarter fungiert, und Kettenabbruchreaktionen entstehen Polyether mit relativ breiter Molmassenverteilung und ungesättigten Nebenprodukten. Insbesondere mit Allylalkohol als Startalkohol bringt die unter alkalischer Katalyse durchgeführte Alkoxylierungsreaktion auch Propenylpolyether hervor. Diese Propenylpolyether erweisen sich bei der hydrosilylierenden Weiterverarbeitung zu SiC-gestützten SiliconpolyetherCopolymeren als unreaktive Beiprodukte und sind zudem - durch die hydrolytische Labilität der in ihnen enthaltenen Vinyletherbindung und Freisetzung von Propionaldehyd - unerwünschte Quelle olfaktorischer Produktbelastungen . Dies ist beispielsweise in der EP-A-1431331 beschrieben.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.

Neben der basenkatalysierten Reaktion sind auch saure Katalysen zur Alkoxylierung bekannt. So wird in DE-102004007561 die Verwendung von HBF₄ und von Lewis-Säuren wie z.B. BF₃, AlCl₃ und SnCl₄ in der Alkoxylierungstechnologie beschrieben.

Nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.

Als Katalysatoren zur Herstellung von Polyetheralkoholen werden aber auch häufig Multimetallcyanidverbindungen oder Doppelmetallcyanid-Katalysatoren, allgemeingebräuchlich auch als DMC-Katalysatoren bezeichnet, eingesetzt. Durch den Einsatz von DMC-Katalysatoren wird der Gehalt an ungesättigten Nebenprodukten minimiert, außerdem verläuft die Umsetzung, verglichen mit den üblichen basischen Katalysatoren, mit einer deutlich höheren Raum-Zeit-Ausbeute. Die Herstellung und Verwendung von Doppelmetallcyanid-Komplexen als Alkoxylierungskatalysatoren ist seit den 1960er Jahren bekannt und wird zum Beispiel in US-3,427,256, US-3,427,334, US-3,427,335, US-3,278,457, US-3,278,458, US-3,278,459 dargestellt. Unter den in den Folgejahren weiter entwickelten und z.B. in US-5,470,813 und US-5,482,908 beschriebenen, immer wirksameren Typen von DMC-Katalysatoren befinden sich im speziellen Zink-Cobalt-Hexacyanokomplexe. Dank ihrer außerordentlich hohen Aktivität werden zur Herstellung von Polyetheralkohole nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Die mit DMC-Katalysatoren hergestellten Alkoxylierungsprodukte zeichnen sich durch eine viel engere Molmassenverteilung im Vergleich zu alkalisch katalysierten Produkten aus. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Die im unmittelbaren Vergleich mit Alkali- und Säurekatalyse an DMC-Katalysatoren durchgeführte Alkoxylierungsreaktion ist unter den beschriebenen technischen Eigenarten so vorteilhaft, dass sie zur Entwicklung kontinuierlicher Prozesse zur Herstellung volumenstarker einfacher, zumeist nur aus PO-Einheiten bestehender, Polyetherole geführt hat. So beschreibt WO-98/03571 ein Verfahren zur kontinuierlichen Herstellung von Polyetheralkoholen mittels DMC-Katalysatoren, bei dem in einem kontinuierlichen Rührkessel zunächst eine Mischung aus einem Starter und einem DMC-Katalysator vorgelegt, der Katalysator aktiviert und zu dieser aktivierten Mischung kontinuierlich weiterer Starter, Alkylenoxide und DMC-Katalysator gegeben und, nach Erreichen des angestrebten Füllstands des Reaktors, kontinuierlich Polyetheralkohol abgezogen wird.

In JP-06-16806 wird ein Verfahren zur kontinuierlichen Herstellung von Polyetheralkoholen mittels DMC-Katalysatoren ebenfalls in einem kontinuierlichen Rührkessel oder in einem Rohrreaktor beschrieben, bei dem eine aktivierte Startsubstanzmischung am Eingang vorgelegt und an verschiedenen Punkten des Rohrreaktors Alkylenoxid zudosiert wird.

Auch in DD 203 725 wird ein Verfahren zur kontinuierlichen Herstellung von Polyetheralkoholen mittels DMC-Katalysatoren beschrieben, bei dem in einem Rohrreaktor eine aktivierte Startsubstanzmischung am Eingang vorgelegt und an verschiedenen Punkten des Rohrreaktors Alkylenoxid zudosiert wird.

In WO-01/62826, WO-01/62824 und WO-01/62825 werden spezielle Reaktoren für das kontinuierliche Verfahren zur Herstellung von Polyetheralkoholen mittels DMC-Katalysatoren beschrieben.

Die Patentliteratur stellt bei den hier beschriebenen technischen Verfahren insbesondere auf die Monodispersität des nach DMC-Verfahren gewonnenen Polyetherols ab. So sind enge Molmassenverteilungen oft wünschenswert, wie im Falle der für PU-Verschäumungssysteme genutzten Polyole (DE-10008630, US 5,689,012).

Nicht in allen Anwendungsgebieten ist eine geringe Molmassenverteilung jedoch gleichbedeutend mit hoher Qualität. In sensiblen Applikationen kann eine zu geringe Polydispersität sogar von Nachteil sein, was die Verwendbarkeit DMC-basierender Polyether/Polyetheralkohole einschränkt. So weist die Schrift EP-A-1066334 in diesem Zusammenhang darauf hin, dass man die nach alkalischem Alkoxylierungsverfahren gewonnenen Polyetheralkohole nicht in einfacher Weise durch die mittels DMC-Katalyse hergestellten Polyetherole substituieren kann. Einschränkung erfährt die Nützlichkeit der via DMC-Katalyse gewonnenen und durch ihre enge Molekulargewichtsverteilung charakterisierten Polyetherole insbesondere dort, wo man sie als Copolymerkomponenten in Siliconpolyethercopolymeren einsetzen will, die z.B. als grenzflächenaktive Substanzen Eingang in Polyurethanschaumsysteme nehmen (PU-Schaumstabilisatoren).

Diese technisch bedeutende Substanzklasse zeichnet sich dadurch aus, dass sie bereits in kleiner Dosierung im zu verschäumenden PU-System dessen morphologische Ausprägung und damit die spätere Gebrauchseigenschaft der erhaltenen Schaumteile maßgeblich steuert.

Wie in US 5,856,369 und US 5,877,268 dargelegt, ist zwar einerseits die hohe chemische Reinheit und geringe Polydispersität der mittels DMC-Katalysatoren hergestellten Polyetherole wünschenswert, andererseits bedingt die DMC-Katalyse einen im Vergleich zu herkömmlichen, alkalisch katalysierten Polyethern derart andersartigen Aufbau der Polyetherkette, dass DMC-basierte Polyetherole nur mit großen Einschränkungen als Vorprodukte für grenzflächenaktive Polyethersiloxane geeignet sind. Die Anwendbarkeit der beschriebenen meist Allylalkohol-gestarteten Polyetherole auf dem Gebiet der PU-Schaumstabilisatoren beschränkt sich auf eine relativ kleine Gruppe von Polyetherolen, die aus Ethylenoxid- und Propylenoxid-Monomereinheiten in teils statistisch gemischter Abfolge bestehen und in denen der Ethylenoxidanteil nicht über 60 mol-% betragen darf, um die Entstehung von Polyethylenglykol-Blöcken in der Polymerkette zu vermeiden. Aus der Tatsache, dass darüber hinaus zur Herstellung von tensidisch wirksamen Polyethersiloxanen nur Blends von mindestens zwei sich in ihrer Molmasse unterscheidenden DMC-basierenden EO/PO-Polyetherolen eingesetzt werden, belegt, dass eine durch die DMC-Technologie nach heutigem Stand der Technik vorgegebene, sehr enge Molmassenverteilung auf dem Gebiet der PU-Schaumstabilisatoren keineswegs vorteilhaft ist.

Die Substitution der nach gängiger alkalischer Katalyse hergestellten Polyetherole durch solche, die nach DMC-Katalyse synthetisiert werden, liefert andersartige Alkoxylierungsprodukte deren Verwendbarkeit als Copolymerkomponenten in PU-bewährten, etablierten Siliconpolyethercopolymeren nur eingeschränkt gegeben ist.

Der Stand der Technik referiert Alkoxylierungsverfahren, die sich der Katalyse mit Doppelmetallcyanid-Katalysatoren bedienen. Als Referenz sei hier z. B. auf EP-A-1017738, US-5,777,177, EP-A-0981407, WO-2006/002807 und EP-A-1474464 verwiesen.

In der Patentliteratur mangelt es nicht an Verfahren, durch Eingriffe in der für die spätere Produktzusammensetzung mitentscheidenden Startphase des Alkoxylierungsprozesses die Wirkweise der DMC-Katalysatoren in einer Weise zu beeinflussen, dass die Katalysatoraktivität gesteigert und möglichst hochreine Produkte mit geringstmöglicher Polydispersität erhalten werden, wie sie durch herkömmliche meist alkalische Katalyseverfahren bislang nicht zugänglich sind. Der Zusatz von Co-Katalysatoren wie Zinksulfat dient in EP-A-0222453 dazu, den DMC-Katalysator so zu modifizieren, dass er in Bezug auf die Copolymerisation von Alkylenoxiden mit Kohlendioxid optimal geeignet ist. Gemäß EP-A-0981407 gelingt es durch Vakuumstrippen der Starter/DMC-Katalysatormischung mit inerten Gasen, die Aktivität des Katalysators zu steigern, die Initialisierungsphase vor der Alkylenoxiddosage zu verkürzen und Polyether mit besonders geringer Polydispersität herzustellen. US-6,713,599 beschreibt die Zugabe sterisch gehinderter, protonierend wirkender Alkohole, Phenole und Carbonsäuren als Additiv zum DMC-Katalysator in der Startphase des Herstellprozesses mit dem Ziel, die Polydispersität der Produkte zu verringern und die Qualität durch den Erhalt besonders molekular einheitlicher Polyether zu erhöhen.

Wie ZHANG et al. (AIChE Annual Meeting, Conference Proceedings Nov. 7-12, 2004, 353B) überzeugend belegen, ist die Kinetik der Alkoxylierung an DMC-Katalysatoren von so einzigartiger Natur, dass man selbst bei Verwendung rückvermischender Reaktoren (Loops, etc.), den Prozess, der zu einer engen Molekulargewichtsverteilung führt, nicht in die Richtung höherer Polydispersität lenken kann.

Somit definiert sich die zu lösende technische Aufgabe darin, ein Verfahren zur DMC-katalysierten Herstellung von Polyethern zu finden, das es gestattet, auf chemischem Wege durch Eingriff in den Katalysemechanismus und unabhängig vom Reaktortyp (Rührreaktor, Schlaufenreaktor, Strahlsauger, Rohrreaktor oder z.B. Reaktorkaskade) und Verfahrensprinzip (Batchfahrweise oder kontinuierliches Verfahren) Molmassenverteilungen gezielt und reproduzierbar entsprechend den Erfordernissen des gewünschten Anwendungsgebiets anzusteuern und selbst Polyether mit einer Polydispersität Mw/Mn herzustellen, die von der Polydispersität nach den bekannten Verfahren abweicht. Vorzugsweise zielt das erfindungsgemäße Verfahren auf die Herstellung von Polyethern, die unmittelbar selbst als grenzflächenaktive Verbindungen oder aber als Vorprodukte zur Herstellung von Tensiden geeignet sind.

Überraschenderweise wurde gefunden, dass der Einsatz bestimmter Siliziumverbindungen mit einem oder mehreren direkt am Silizium-Atom gebundenen Wasserstoffatomen als Si-H-Additiv zum Startgemisch aus OH-funktionellem Starter und DMC-Katalysator die Aufgabe löst.
Mit diesem Einsatz des Si-H-Additivs geht damit einher, dass die Polydispersität Mw/Mn des gebildeten Polyethers höher ist im Vergleich zu einem Polyether der ohne Zusatz des Additivs unter sonst gleichen Reaktionsbedingungen hergestellt wird.

Weiterer Gegenstand der Erfindung ist die Verwendung von bestimmten Siliziumverbindungen mit einem oder mehreren direkt am Silizium-Atom gebundenen Wasserstoffatomen als Si-H-Additiv in einem Verfahren zur DMC-katalysierten Herstellung von Polyethern, die bereits in geringen Konzentrationen eine veränderte Polydispersität der Alkoxylierungsprodukte bewirken. Si-H-Additive werden in einem Konzentrationsbereich von 0,01 bis 3 Gew.-%, bevorzugt 0,01 bis 1 Gew.-% bezogen auf die Gesamtmasse der Polyetherpolyole zugefügt.
Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 100 wppm und ganz besonders bevorzugt bei 1 bis 50 wppm. Diese Konzentration ist dabei bezogen auf die Gesamtmasse der gebildeten Polyetherpolyole; die Reaktionstemperatur beträgt etwa 60 bis 250 °C, bevorzugt von 90 bis 160 °C und besonders bevorzugt etwa 100 bis 130 °C. Der Druck, bei dem die Alkoxylierung stattfindet, beträgt vorzugsweise 0,02 bar bis 100 bar, bevorzugt 0,05 bis 20 bar absolut.

Der Zusatz führt vorzugsweise zu einer signifikanten Verbreiterung der Molmassenverteilung und damit signifikant erhöhter Polydispersität der resultierenden Endprodukte.

Die Signifikanz der Verbreiterung der Molmassenverteilung oder anders ausgedrückt der erhöhten Polydispersität ergibt sich zwangsläufig aus dem Vergleich der Versuche ohne den Zusatz des Additivs und damit der unmodifizierten DMC-Katalyse, die eine hohe Wiederholbarkeit und Molmasseneinheitlichkeit kennzeichnet.

Die Polydispersität der gebildeten Polyetheralkohole bei Anwendung des erfindungsgemäßen Verfahrens ist vorzugsweise um mindestens 10 % , bevorzugt um mindestens 20 % und insbesondere um mindestens 30 % erhöht gegenüber einem Alkoxylierungsverfahren ohne Zusatz des Si-H-Additivs oder der Si-H-Additive bei ansonsten gleichen Reaktionsbedingungen. Dies gilt nahezu unabhängig von den Verfahrensbedingungen wie beispielsweise der Temperatur, der Katalysatorkonzentration und der Polymerisations-/Alkoxylierungsdauer.

In absoluten Werten ausgedrückt, ergibt sich vorzugsweise eine Erhöhung der Polydispersität um mindestens 0,1, bevorzugt um mindestens 0,2 und besonders bevorzugt um mindestens 0,4 bei Zusatz des Si-H-Additivs bei ansonsten gleichen Reaktionsbedingungen. Die absolute Änderung ist dabei beispielsweise und nicht abschließend aufgezählt, in dem Fachmann bekannter Weise abhängig von der Konzentration des eingesetzten Katalysators, der Konzentration des Additivs, dem Startalkohol und natürlich der Polymerisations-/Alkoxylierungsdauer und damit der Kettenlänge des gebildeten Polyether.

Bevorzugt sind insbesondere erfindungsgemäß hergestellte Polyetherole mit mittleren Molmassen von unter 8000 g/mol, hergestellt aus Startverbindungen wie Allylalkohol, Hexenol, Butanol, Octanol, Decanol, Dodecanol, Stearylalkohol, 2-Ethylhexanol, Isononanol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan und Glycerin mit einer Polydispersität von größer oder gleich 1,2. Die unter gleichen Reaktionsbedingungen hergestellten Polyetherole ohne Si-H-Additivzusatz weisen zum Vergleich Polydispersitäten von etwa 1,05 bis 1,15 auf.

Darüber hinaus bevorzugt sind aus vorgenannten Startverbindungen erfindungsgemäß hergestellte höhermolekulare Polyetherole mit mittleren Molmassen von über 8000 g/mol und mit einer Polydispersität von größer oder gleich 1,4 Die unter gleichen Reaktionsbedingungen hergestellten Polyetherole ohne Si-H-Additivzusatz weisen zum Vergleich Polydispersitäten von etwa 1,1 und in Ausnahmefällen bis 1,3 auf.

Die genannten prozentualen bzw. absoluten Werte der Polydispersitätserhöhung beziehen sich auf typische GPC-Messbedingungen: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Es wird somit ein Verfahren zur Herstellung von Polyetheralkoholen mit erhöhter Polydispersität durch Polymerisation mittels Doppelmetallcyanid-Katalysatoren (DMC-Katalysatoren) zur Verfügung gestellt, bei dem vor oder während der Polymerisation ein oder mehrere, gegebenenfalls gemischte Si-H-Additive, nachfolgend auch nur als Additiv bezeichnet, bestehend aus Verbindungen mit einem oder mehreren (hydridischen) Wasserstoffatomen an einem Siliziumatom zugegeben werden.

Die kovalente Wasserstoff-Silizium-Bindung zeigt eine negative Polarisierung des Wasserstoffs. Dieser Wasserstoff ist damit hydridischer Natur und kann aktiv zum Beispiel mit anderen H-aciden Verbindungen (unter Wasserstofffreisetzung) reagieren.

Inwieweit sich der hydridische Charakter des Si-H-Wasserstoffs bei der erfindungsgemäßen Verfahren auswirkt, ist noch ungeklärt.

Unter erhöhter Polydispersität ist dabei der Unterschied des M_{w}/Mₙ-Wertes zu verstehen, der sich aus dem Vergleich zwischen dem Wert bei (normaler) Standard-DMC-Katalyse zu dem bei Mitverwendung eines erfindungsgemäßen Additivs ergibt. Je nach verwendeter Startverbindung kann selbst eine geringe Erhöhung des Werts signifikant sein und die gewünschten Eigenschaften des Polymerisationsproduktes positiv beeinflussen.

Weitere Ausgestaltungen der erfindungsgemäßen Lehre ergeben sich aus den Ansprüchen, deren Inhalt vollumfänglich Teil dieser Beschreibung ist.

Weiteres Ziel des erfindungsgemäßen Verfahrens ist es, die von den Doppelmetallcyanid-Systemen bekannten Vorteile einer hohen Reaktionsgeschwindigkeit und des Verzichts auf die Katalysatordeaktivierung und -abtrennung zu konservieren.

Dabei ist die Verbreiterung der Polydispersität abhängig von der Konzentration des zugesetzten Additivs, seiner Struktur und gegebenenfalls dem Mischungsverhältnis bei Mischungen von Additiven; jedenfalls aber jeweils reproduzierbar.

Die erfindungsgemäß als Additive bevorzugt verwendeten Silane sind Verbindungen der allgemeinen Formel (I)

R'''ₐ H_{b} Si (I),

wobei

R"' einen oder mehrere gleiche oder verschiedene Reste, ausgewählt aus linearen oder verzweigten, gesättigten, einfach oder mehrfach ungesättigten Alkyl-, Alkoxy-, Alkylsilyl-, Aryl-, Alkylaryl- oder Arylalkylresten mit 1 bis 40, insbesondere 1 bis 20 Kohlenstoffatomen oder Halogenalkylgruppen mit 1 bis 20 Kohlenstoffatomen,
- a: eine ganze Zahl von 1 bis 3,
- b: eine ganze Zahl von 1 bis 3 darstellt,
mit der Maßgabe, dass die Summe aus a und b gleich 4 ist und mindestens ein an ein Siliziumatom gebundenes Wasserstoffatom im Molekül vorhanden ist.

Eine nicht abschließende Sammlung solcher, erfindungsgemäßer Silan-Additive gemäß der Formel (I), die allein oder in Mischungen miteinander oder in Kombination mit Wasserstoffsiloxanen der Formel (II) verwendet werden können, umfasst: Monomethyl-, Dimethyl- und Trimethylsilan, Monoethyl-, Diethyl-, Triethylsilan, Monopropyl, Dipropyl-, Tripropylsilan, Monophenyl-, Diphenyl-, Triphenylsilan, Phenylmethyl- und Phenylethylsilan, Phenyldimethyl- und Phenyldiethylsilan, Monomethoxy-, Dimethoxy- und Trimethoxysilan und Monoethoxy-, Diethoxy-, und Triethoxysilan, Dimethylmethoxysilan, Methyldimethoxysilan und zum Beispiel Tris(trimethylsilyl)silan.

Die neben den in Formel (I) genannten Silanen ebenfalls erfindungsgemäß als Additive bevorzugt verwendeten Wasserstoffsiloxane sind Polyorganosiloxane der allgemeinen Formel (II) 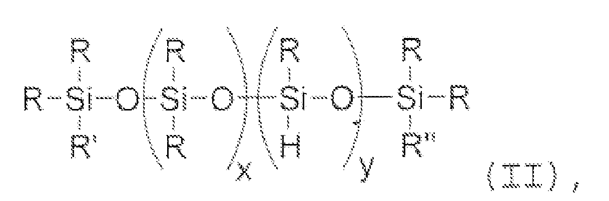 in denen

R einen oder mehrere gleiche oder verschiedene Reste, ausgewählt aus linearen oder verzweigten, gesättigten, einfach oder mehrfach ungesättigten Alkyl-, Alkoxy, Aryl-, Alkylaryl- oder Arylalkylresten mit 1 bis 40, insbesondere 1 bis 20 Kohlenstoffatomen, Halogenalkylgruppen mit 1 bis 20 Kohlenstoffatomen, Siloxygruppen und Triorganosiloxygruppen,
R' und R" unabhängig voneinander H oder R,
- x: eine ganze Zahl von 0 bis 600, vorzugsweise 0 bis 200,
- y: eine ganze Zahl von 0 bis 100, vorzugsweise 0 bis 50,
insbesondere < 40 darstellt,
mit der Maßgabe, dass mindestens ein an ein Siliziumatom gebundenes Wasserstoffatom im Molekül vorhanden ist.

Besonders unerwartet ist, dass erfindungsgemäße Additive mit hydridischem Wasserstoff in der Lage sind, den Wirkmechanismus des Doppelmetallcyanidkatalysators auf eine Art zu beeinflussen, die es gestattet, die Kinetik des Kettenwachstums zu verändern und je nach Additivkonzentration und -art verschieden hohe Polydispersitäten anzusteuern. Ganz entgegengesetzt zu den Ausführungen in US-6,713,599 B1, wo durch den Zusatz acider OH-funktioneller Substanzen eine Verringerung der Polydispersität der Polyether angestrebt und erzielt wird, bewirkt der Einsatz spezieller Wasserstoff-substituierter Siliziumverbindungen mit hydridischem Wasserstoff in der DMC-katalysierten Alkoxylierung eine deutliche Erhöhung der Polydispersität der Endprodukte.
Das jeweilige Additiv wird in solch geringen Konzentrationen der Reaktionsmischung zugefügt, dass es ohne negativen Einfluss auf die Produktqualität im fertigen Polyether verbleiben kann.

Im Gegensatz zur bereits beschriebenen Alkoxylierung unter Basenkatalyse erleiden Allylalkohol basierende Systeme unter DMC-Katalyse keine Umlagerung zu Propenylpolyethern. Erstaunlicherweise und für den Fachmann keinesfalls vorhersehbar, bringt das hier erfindungsgemäß beanspruchte, mit einem Additivzusatz von Wasserstoffsiloxanen bzw. Silanen versehene Katalysatorsystem auch keine unerwünschten Propenylgruppen aufweisenden Nebenprodukte hervor.

Somit kommen dem erfindungsgemäßen Verfahren alle Vorteile der DMC-Katalyse weiterhin zu Gute, mit dem Zusatznutzen, dass die gewünschte Erhöhung der Polydispersität reproduzierbar eingestellt werden kann.

Die Zugabe des Additivs erfolgt bevorzugt in einer Portion am Anfang der Alkoxylierung vor dem Start der Alkylenoxiddosierung, kann aber alternativ auch kontinuierlich (z.B. gelöst/dispergiert im Feedstrom des/der Reaktanden) sowie in mehreren Portionen während der laufenden Addition von Alkylenoxid geschehen. Als Epoxidmonomere im Sinne der Erfindung können neben Ethylenoxid, Propylenoxid, Butylenoxid und Styroloxid alle bekannten weiteren mono- und polyfunktionellen Epoxidverbindungen inklusive der Glycidylether und -ester eingesetzt werden, und zwar einzeln als auch im Gemisch und sowohl statistisch als auch in blockartiger Abfolge.
Es können ein oder mehrere, gegebenenfalls gemischte Additive der angegebenen Struktur eingesetzt werden.
Zum Starten der Reaktion kann es vorteilhaft sein, wenn zunächst ein Reaktionsgemisch, welches den DMC-Katalysator, gegebenenfalls in einem Suspendiermittel aufgeschlämmt enthält, im Reaktor vorgelegt wird und diesem System zumindest ein Alkylenoxid zudosiert wird. Das molare Verhältnis von Alkylenoxid zu reaktiven Gruppen, insbesondere OH-Gruppen im Startgemisch liegt dabei vorzugsweise bei 0,1 bis 5 zu 1, bevorzugt bei 0,2 bis 2 zu 1. Es kann vorteilhaft sein, wenn vor der Zugabe des Alkylenoxids gegebenenfalls vorhandene, die Reaktion inhibierende Stoffe aus dem Reaktionsgemisch, z.B. durch Destillation, entfernt werden. Als Suspensionsmittel können entweder ein Polyether oder inerte Lösungsmittel benutzt werden oder vorteilhaft auch die Startverbindung, an die Alkylenoxid angelagert werden soll, oder ein Gemisch aus Beiden.

Das Starten der Reaktion kann z. B. durch eine Drucküberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist.

Nach der Startphase, also nach Initialisierung der Reaktion, werden je nach angestrebter Molmasse entweder gleichzeitig Startverbindung und Alkylenoxid oder nur Alkylenoxid zudosiert. Alternativ kann auch ein beliebiges Gemisch von unterschiedlichen Alkylenoxiden addiert werden. Die Umsetzung kann z.B. zwecks Viskositätserniedrigung in einem inerten Lösemittel durchgeführt werden. Das molare Verhältnis der dosierten Alkylenoxide bezogen auf die eingesetzte Startverbindung, insbesondere bezogen auf die Anzahl der OH-Gruppen der eingesetzten Startverbindung, beträgt dabei vorzugsweise 0 bis 10⁶ zu 1.

Als Alkylenoxide können Verbindungen eingesetzt werden, die die allgemeine Formel (IIIa) aufweisen, 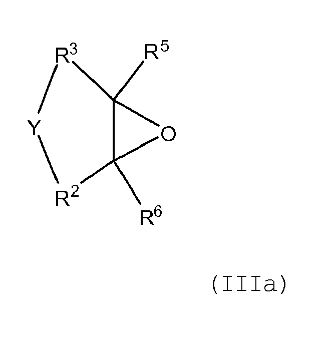 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann eine Methylenbrücke mit 0, 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (IIIa) R² oder R³ Wasserstoff. Besonders bevorzugt werden als Alkylenoxide Ethylenoxid, Propylenoxid, 1,2- oder 2,3-Butylenoxid, Isobutylenoxid, 1,2-Dodecenoxid, Styroloxid, Cyclohexenoxid (hier ist R²-R³ eine -CH₂CH₂CH₂CH₂-Gruppe, Y damit -CH₂CH₂-) oder Vinylcyclohexenoxid oder deren Mischungen eingesetzt. Die Kohlenwasserstoffreste R² und R³ gemäß Formel (IIIa) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol.
Ebenfalls können Glycidylverbindungen wie Glycidylether und/oder Glycidylester der allgemeinen Formel (IIIb), 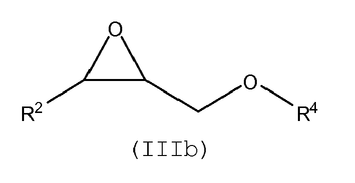 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, verwendet werden. Zu dieser Klasse von Verbindungen gehören zum Beispiel Allyl-, Butyl-, 2-Ethylhexyl-, Cyclohexyl-, Benzyl-, C_{12/}C₁₄-Fettalkohol-, Phenyl-, p-tert.-Butylphenyl- oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Als Starter für die Alkoxylierungsreaktion können alle Verbindungen

R¹-H (IV)

(das H gehört zur OH-Gruppe des Alkohols) eingesetzt werden, die gemäß Formel (IV) mindestens eine reaktive Hydroxylgruppe aufweisen.

Unter Startverbindungen werden im Rahmen der vorliegenden Erfindung Substanzen verstanden, die den Anfang (Start) des herzustellenden Polyethermoleküls bilden, das durch die Anlagerung von Alkylenoxid erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols) eingesetzt.

Als OH-funktionelle Startverbindungen werden vorzugsweise Verbindungen mit Molmassen von 18 bis 2000 g/mol, insbesondere 100 bis 2000 g/mol und 1 bis 8, bevorzugt 1 bis 4 Hydroxylgruppen eingesetzt. Beispielhaft seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, oder auf Naturstoffen basierende, Hydroxylgruppen tragende Verbindungen, genannt.

Vorteilhaft werden niedermolekulare Polyetherole mit 1-8 Hydroxylgruppen und Molmassen von 100 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1-20 phenolischen OH-Funktionen. Hierzu gehören beispielspweise Phenol, Alkyl- und Arylphenole, Bisphenol A und Novolake.

Mit dem erfindungsgemäßen Verfahren können je nach eingesetztem Epoxid und Art der Epoxidringöffnung Polyetheralkohole der Formel (Va) und (Vb) sowie deren Mischungen hergestellt werden.

R¹- [ (CR⁶R²-CR⁵R³-O) ₙH]ₘ oder R¹- [ (CR⁵R³-CR⁶R²-O) ₙH]ₘ

(Va)

R¹-[(CHR²-CH(CH₂OR⁴)-O)ₙH]ₘ oder R¹-[(CH(CH₂OR⁴)-CHR²-O)ₙH]ₘ

(Vb)
wobei R¹ entweder ein Hydroxylrest oder einen Rest der organischen Startverbindung darstellt und in diesem Falle ein mindestens ein Kohlenstoffatom aufweisender Rest ist,
m gleich 1 bis 8, bevorzugt 1 bis 6, besonders bevorzugt 1 bis 4 ist,
n gleich 1 bis 12.000, bevorzugt 1 bis 800, weiter bevorzugt 4 bis 400 und besonders bevorzugt 20 bis 200 ist
und die Definitionen der Reste R², R³, R⁴, R⁵ und R⁶ denen der Formel (IIIa) bzw. (IIIb) entsprechen.

Insbesondere können mit dem erfindungsgemäßen Verfahren Polyether der Formel (Va) oder (Vb) synthetisiert werden, die sich dadurch auszeichnen, dass sie hinsichtlich Strukturaufbau und Molmassenverteilung gezielt und reproduzierbar hergestellt werden können. Diese Polyether eignen sich als Grundstoffe zur Herstellung von z. B. Polyurethanen und besonders gut zur Herstellung von Produkten mit grenzflächenaktiven Eigenschaften, darunter beispielsweise, aber nicht abschließend genannt, organomodifizierte Siloxanverbindungen. Zu diesen Tensiden gehören - ohne sich allerdings darauf zu beschränken - Siliconpolyethercopolymere als PU-Schaumstabilisatoren ebenso wie Emulgatoren, Dispergiermittel, Entschäumer, Verdicker und beispielsweise Trennmittel.

Das erfindungsgemäße Verfahren, bei dem die Alkoxylierung OH-funktioneller Verbindungen wie Alkohole, Polyole, Phenole oder auch Polyetherole mittels DMC-Katalyse in Gegenwart bestimmter Wasserstoff-substituierter Siliziumverbindungen der Formeln (I) und (II) ausgeführt wird, unterscheidet sich somit in jeder Hinsicht grundlegend von der in US-6,713,599 B1 beschriebenen Verfahrensweise und hebt die bisherige zwangsläufige Kopplung von DMC-Katalyse und damit verbundener Entstehung von Polyethern niedriger Polydispersität auf. Damit steht ein Instrument zur Verfügung, das es erlaubt, die Vorteile der DMC-Technologie weiter zu nutzen und um die Flexibilität der Molmassensteuerung zu bereichern, um letztendlich so das Anwendungsspektrum so hergestellter DMC-basierender Produkte auf den sensiblen Bereich der grenzflächenaktiven Applikationen zu erweitern.

Die Art der eingesetzten Alkylenoxide und Glycidylverbindungen, die Zusammensetzung von Mischungen dieser Epoxidverbindungen sowie die Reihenfolge ihrer Addition während des DMC-katalysierten Alkoxylierungsprozesses hängt von dem gewünschten Einsatzzweck der Polyetheralkohole ab.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen.

Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen.

Neben herkömmlichen Rührkesselreaktoren können auch Strahlschlaufenreaktoren mit Gasphase und externen Wärmetauschern, wie beispielsweise in EP-A-0419419 beschrieben, oder internen Wärmetauscherrohren, wie in WO-01/62826 beschrieben, verwendet werden. Darüber hinaus können gasphasenfreie Loop-Reaktoren eingesetzt werden.
Bei der Dosierung der Edukte ist eine gute Verteilung der an der chemischen Umsetzung beteiligten Stoffe, d.h. der Alkylenoxide bzw. Glycidylverbindungen, Starter, DMC-Katalysator und gegebenenfalls Suspensionsmittel und des erfindungsgemäßen Additivs notwendig.

Nach der Alkylenoxid-Addition und eventueller Nachreaktion zur Vervollständigung des Alkylenoxidumsatzes kann das Produkt aufgearbeitet werden. Die hier erforderliche Aufarbeitung umfasst im Prinzip nur die Entfernung von nicht abreagiertem Alkylenoxid und eventuell weiteren, leicht flüchtigen Bestandteilen, üblicherweise durch Vakuumdestillation, Wasserdampf- oder Gasstrippen oder andere Methoden der Desodorierung. Die Entfernung leichtflüchtiger Nebenkomponenten kann sowohl batchweise als auch kontinuierlich erfolgen. Beim erfindungsgemäßen Verfahren auf Basis der DMC-Katalyse kann im Gegensatz zur konventionellen basen-katalysierten Alkoxylierung im Normalfall auf eine Filtration verzichtet werden.

Es ist bei Bedarf möglich, den DMC-Katalysator aus dem fertigen Polyetheralkohol zu entfernen. Für die meisten Einsatzgebiete kann er jedoch im Polyetheralkohol verbleiben. Prinzipiell möglich, wenn auch nicht bevorzugt, ist es, den DMC-Katalysator abzutrennen und wieder zu verwenden, wie beispielsweise in WO 01/38421 beschrieben. Diese Verfahrensweise ist jedoch für die großtechnische Herstellung von Polyetheralkoholen meist zu aufwändig.

Die Anlagerung der Alkylenoxid- bzw. allgemeiner gefasst Epoxidverbindungen geschieht vorzugsweise bei einer Temperatur von 60 bis 250 °C, bevorzugt von 90 bis 160 °C und besonders bevorzugt bei einer Temperatur von 100 bis 130 °C. Der Druck, bei dem die Alkoxylierung stattfindet, beträgt vorzugsweise 0,02 bar bis 100 bar, bevorzugt 0,05 bis 20 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) und auch bei Überdruck durchgeführt werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Additiv kann vor Beginn der Dosierung der Alkylenoxide gemäß der Lehre von WO 98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaktanden oder durch Nebenreaktionen auch inhibierende Verbindungen in das Reaktionsgemisch gelangen können.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US-5,158,922, US-20030119663, WO-01/80994 oder in den oben genannten Schriften beschriebenen DMC-Katalysatoren eingesetzt. Die Katalysatoren können amorph oder kristallin sein.

Im Reaktionsgemisch liegt die Katalysatorkonzentration vorzugsweise bei > 0 bis 1.000 wppm (Massen-ppm), bevorzugt bei > 0 bis 500 wppm, besonders bevorzugt bei 0,1 bis 100 wppm und ganz besonders bevorzugt bei 1 bis 50 wppm. Diese Konzentration ist dabei bezogen auf die Gesamtmasse der Polyetherpolyole.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Startpolyether als Suspensionsmittel. Bevorzugt wird aber auf eine Suspendierung verzichtet.

Experimenteller Teil:
Die aufgeführten Beispiele dienen nur der Illustration, beschränken aber den Erfindungsgegenstand in keiner Weise. GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Herstellung von Polypropylenglykol nach erfindungsgemäßem Verfahren unter Zusatz eines Additivs

### Beispiel 1a:

In einem 3 Liter Autoklaven werden 215,7 g Polypropylenglykol (massenmittlere Molmasse M_{w} = 2000 g/mol), 0,03 g Zinkhexacyanocobaltat-DMC-Katalysator und 5,9 g Heptamethylhydrogentrisiloxan mit einem SiH-Gehalt von 4,5 val/kg (Rhodia), CAS [1873-88-7] unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 40,0 g Propylenoxid zugeführt. Nach Anspringen der Reaktion und erfolgtem Innendruckabfall werden weitere 944 g Propylenoxid kontinuierlich unter Kühlen innerhalb von 60 min bei 130 °C und max. 1,5 bar Reaktorinnendruck zudosiert. An die 30 minütige Nachreaktion bei 130 °C schließt sich die Entgasungsstufe an. Dabei werden flüchtige Anteile wie restliches Propylenoxid im Vakuum bei 130 °C abdestilliert. Der fertige Polyether wird auf unter 80 °C abgekühlt und aus dem Reaktor abgelassen.

Das erhaltene langkettige Polypropylenglykol besitzt eine OH-Zahl von 10,2 mg KOH/g, eine Viskosität (25 °C) von 10.400 mPas und lt. GPC eine Polydispersität M_{w}/Mₙ von 1,8 .

### Vergleichsversuch zu 1a) ohne Zusatz eines Additivs (nicht erfindungsgemäß)

### Beispiel 1b:

In einem weiteren analog Beispiel 1a durchgeführten Referenzversuch wird nach bisherigem Stand der Technik der Polypropylenglykol/DMC-Katalysator-Mischung beim Start der Alkoxylierung kein Additiv zugefügt.
Das erhaltene langkettige niedrig viskose Polypropylenglykol besitzt eine OH-Zahl von 9,8 mg KOH/g, eine Viskosität (25 °C) von 7.100 mPas und lt. GPC eine Polydispersität M_{w}/Mₙ von 1,4.

### Versuchsübersicht 1:

Einfluss des Additivzusatzes auf die Polydispersität am Beispiel eines langkettigen Polypropylenglykols.
Startpolyether: Polypropylenglykol (M_{w} = 2000 g/mol),
Katalysator: Zinkhexacyanocobaltat
GPC-Analysen gegen Polypropylenglykol-Standard

| Versuch Nr. | Starter | PO | DMC-Kat. | Additiv | Additiv-menge | Reaktions-Temperatur | OH-Zahl [mg KOH/g] | GPC Mw / Mn |
|---|---|---|---|---|---|---|---|---|
| | | | | | | | | |
| 1a | 215,7g | 984 g | 0,03 g | Heptamethylhydrogentrisiloxan, CAS 1873-88-7 | 5, 90 g | 130°C | 10, 1 | 1,8 |
| 1b* | 215,7g | 984 g | 0,03 g | Ohne Additiv | - | 130°C | 9, 8 | 1,4 |

| | | | | | | | | |
|---|---|---|---|---|---|---|---|---|
| *) Referenzversuch, nicht erfindungsgemäß | | | | | | | | |

Die Polydispersität erhöht sich im Vergleich zum Referenzbeispiel durch Additivzusatz um 0,4, entsprechend 28, 6 %.

### Herstellung von gemischten Ethylenoxid-/Propylenoxid-basierenden Polyethern nach erfindungsgemäßem Verfahren unter Zusatz eines Additivs

### Beispiel 2a:

In einem 3 Liter Autoklaven werden 180,0 g Polypropylenglykolmonoallylether (massenmittlere Molmasse M_{w} = 400 g/mol), 0,08 g Zinkhexacyanocobaltat-DMC-Katalysator und 5,25 g Heptamethylhydrogentrisiloxan mit einem SiH-Gehalt von 4,5 val/kg (Rhodia), CAS [1873-88-7] unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 36,0 g Propylenoxid zugeführt. Nach Anspringen der Reaktion und erfolgtem Innendruckabfall werden als Gemisch 396 g Ethylenoxid und 1269 g Propylenoxid kontinuierlich unter Kühlen innerhalb von 90 min bei 130 °C und max. 1,5 bar Reaktorinnendruck zudosiert. An die 30 minütige Nachreaktion bei 130 °C schließt sich die Entgasungsstufe an. Dabei werden flüchtige Anteile wie restliches Propylenoxid im Vakuum bei 130 °C abdestilliert. Der fertige Polyether wird auf unter 60 °C abgekühlt und aus dem Reaktor abgelassen.

Der erhaltene Allylpolyether besitzt eine OH-Zahl von 13,5 mg KOH/g und lt. GPC eine Polydispersität M_{w}/Mₙ von 1,5.

### Beispiel 2b

In einem analog Beispiel 2a durchgeführten Versuch werden 4,10 g des Additivs Heptamethylhydrogentrisiloxan (Rhodia), mit einem SiH-Gehalt von 4,5 val/kg CAS [1873-88-7] der Polypropylenglykolmonoallylether/DMC-Katalysator-Mischung beim Start der Alkoxylierung zugefügt.
Der erhaltene Allylpolyether besitzt eine OH-Zahl von 13,4 mg KOH/g und lt. GPC eine Polydispersität M_{w}/Mₙ von 1,3.

### Beispiel 2c:

In einem analog Beispiel 2a durchgeführten Versuch werden 5,0 g des Additivs α,ω-Dihydrogenpolydimethylsiloxan mit einem SiH-Gehalt von 2,75 val/kg der Polypropylenglykolmonoallylether/DMC-Katalysator-Mischung beim Start der Alkoxylierung zugefügt.

Der erhaltene Allylpolyether besitzt eine OH-Zahl von 13,5 mg KOH/g und lt. GPC eine Polydispersität M_{w}/Mₙ von 1,5.

### Beispiel 2d:

In einem analog Beispiel 2a durchgeführten Versuch werden 6,2 g Poly(methylhydrogen)-poly(dimethylsiloxan)-Copolymer mit einem SiH-Gehalt von 2,5 val/kg als Additiv der Polypropylen-glykolmonoallylether/DMC-Katalysator-Mischung beim Start der Alkoxylierung zugefügt.

Der erhaltene Allylpolyether besitzt eine OH-Zahl von 13,4 mg KOH/g und lt. GPC eine Polydispersität M_{w}/Mₙ von 1,5.

### Vergleichsversuch zu 2a-d) ohne Zusatz eines Additivs (nicht erfindungsgemäß)

### Beispiel 2e:

In einem weiteren analog zu Beispiel 2a durchgeführten Referenzversuch wird nach bisherigem Stand der Technik der Polypropylenglykolmonoallylether/DMC-Katalysator-Mischung beim Start der Alkoxylierung kein Additiv zugefügt.
Der erhaltene Allylpolyether besitzt eine OH-Zahl von 13,4 mg KOH/g und lt. GPC eine geringe Polydispersität M_{w}/Mₙ von 1,05.

Die Versuchsübersicht 2 zeigt, dass sich die Polydispersität durch den Additiveinsatz in den Versuchen 2a), 2c) und 2d) jeweils um 0,45 erhöht, entsprechend 42,8 %, im Vergleich zum Referenzversuch 2e).
Im Beispiel 2b) steigt die Polydispersität um 0,25 gegenüber dem Referenzversuch 2e), entsprechend um 23,8 %.

### Versuchsübersicht 2:

Einfluss des Additivzusatzes auf die Polydispersität am Beispiel eines Allylpolyethers auf Basis
Ethylenoxid und Propylenoxid.
Startpolyether: Polypropylenglykolmonoallylether (M_{w} = 400 g/mol)
Katalysator: Zinkhexacyanocobaltat
GPC-Analysen gegen Polypropylenglykol-Standard

| Versuch Nr. | Starter | EO | PO | DMC-Kat. | Additiv | Additivmenge | ReaktionsTemperatu r | OH-Zahl [mg KOH/g] | GPC Mw / Mn |
|---|---|---|---|---|---|---|---|---|---|
| 2a | 180 g | 396 g | 1305 g | 0,08 g | Heptamethylhydrogen-trisiloxan, CAS 1873-88-7 | 5,25 g | 130°C | 13,5 | 1,5 |
| 2b | 180 g | 396 g | 1305 g | 0,08 g | Heptamethylhydrogen-trisiloxan, CAS 1873-88-7 | 4,1 g | 130°C | 13,4 | 1,3 |
| 2c | 180 g | 396 g | 1305 g | 0,08 g | α,ω-Dihydrogen-polydimethyl-siloxan | 5,0 g | 130 °C | 13,5 | 1,5 |
| 2d | 180 g | 396 g | 1305 g | 0,08 g | Poly(methyl-hydrogen)-poly(dimethyl-siloxan)-Copolymer | 6,2 g | 130 °C | 13,4 | 1,5 |
| 2e* | 180 g | 396 g | 1305 g | 0,08 g | - | ohne Additiv | 130°C | 13,4 | 1,05 |

| | | | | | | | | | |
|---|---|---|---|---|---|---|---|---|---|
| *) Kelerenzversuch, nicht erfindungsgemäß | | | | | | | | | |

## Patentansprüche

1. Verfahren zur Herstellung von Polyetheralkoholen durch Polymerisation mittels Doppelmetallcyanid-Katalysatoren (DMC-Katalysatoren), **dadurch gekennzeichnet, dass** dem Reaktionsgemisch vor oder während der Polymerisation ein oder mehrere Siliziumverbindungen mit einem oder mehreren direkt am Silizium-Atom gebundenen Wasserstoffatomen als Si-H-Additiv zum Startgemisch aus OH-funktionellem Starter und DMC-Katalysator zugegeben werden.

2. Verfahren nach Anspruch 1, **dadurch gekennzeichnet, dass** die Polydispersität Mw/Mn des gebildeten Polyetherols höher ist im Vergleich zu einem Polyether der ohne Zusatz des Si-H-Additivs unter sonst gleichen Reaktionsbedingungen hergestellt wird.

3. Verfahren nach zumindest einem der Ansprüche 1 oder 2, **dadurch gekennzeichnet, dass** die Polydispersität des gebildeten Polyetherols um mindestens 10 % höher ist im Vergleich zu einem Verfahren, dass ohne Zusatz des Si-H-Additivs durchgeführt wird.

4. Verfahren nach zumindest einem der Ansprüche 1 bis 2, **dadurch gekennzeichnet, dass** der Absolutbetrag der Polydispersität Mw/Mn um mindestens 0,1 höher ist im Vergleich zu einem Verfahren, dass ohne Zusatz des Si-H-Additivs durchgeführt wird.

5. Verfahren zur Herstellung von Polyetheralkoholen gemäß zumindest einem der Ansprüche 1 bis 4, **dadurch gekennzeichnet, dass** das Si-H-Additiv die Formel (I) besitzt
R'''ₐ H_{b} Si (I),
wobei
R"' gleich einem oder mehreren gleichen oder verschiedenen Resten, ausgewählt aus linearen oder verzweigten, gesättigten, einfach oder mehrfach ungesättigten Alkyl-, Alkoxy-, Alkylsilyl, Aryl-, Alkylaryl- oder Arylalkylresten mit 1 bis 40 Kohlenstoffatomen oder Halogenalkylgruppen mit 1 bis 20 Kohlenstoffatomen,
a eine ganze Zahl von 1 bis 3,
b eine ganze Zahl von 1 bis 3 ist,
mit der Maßgabe, dass die Summe aus a und b gleich 4 ist und mindestens ein an ein Siliziumatom gebundenes Wasserstoffatom im Molekül vorhanden ist.

6. Verfahren zur Herstellung von Polyetheralkoholen gemäß zumindest einem der Ansprüche 1 bis 5, **dadurch gekennzeichnet, dass** als Siliziumwasserstoffverbindungen der Formel (I) Monomethyl-, Dimethyl- und Trimethylsilan, Monoethyl-, Diethyl-, Triethylsilan, Monopropyl, Dipropyl-, Tripropylsilan, Monophenyl-, Diphenyl-, Triphenylsilan, Phenylmethyl- und Phenylethylsilan, Phenyldimethyl- und Phenyldiethylsilan, Monomethoxy-, Dimethoxy- und Trimethoxysilan und Monoethoxy-, Diethoxy-, und Triethoxysilan, Dimethylmethoxysilan, Methyldimethoxysilan oder Tris(trimethylsilyl)silan verwendet werden.

7. Verfahren zur Herstellung von Polyetheralkoholen gemäß zumindest einem der Ansprüche 1 bis 6, **dadurch gekennzeichnet, dass** als Si-H-Additiv Wasserstoffsiloxane oder Polyorganosiloxane der allgemeinen Formel (II) 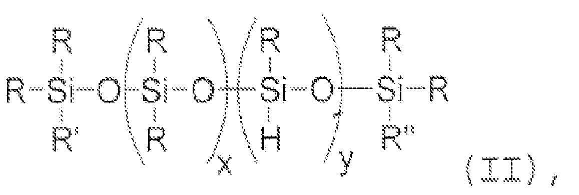 in denen
R einen oder mehrere gleiche oder verschiedene Reste, ausgewählt aus linearen oder verzweigten, gesättigten, einfach oder mehrfach ungesättigten Alkyl-, Alkoxy-, Aryl-, Alkylaryl- oder Arylalkylresten mit 1 bis 40 Kohlenstoffatomen, oder Halogenalkylgruppen mit 1 bis 20 Kohlenstoffatomen, oder Siloxygruppen und Triorganosiloxygruppen, wobei
R' und R" unabhängig voneinander H oder R ist,
x eine ganze Zahl von 0 bis 600 ist,
y eine ganze Zahl von 0 bis 100 ist,
mit der Maßgabe, dass mindestens ein an ein Siliziumatom gebundenes Wasserstoffatom im Molekül vorhanden ist, eingesetzt werden.

8. Verfahren zur Herstellung von Polyetheralkoholen gemäß zumindest einem der Ansprüche 1 bis 7, **dadurch gekennzeichnet, dass** Polyetheralkohole der Formeln (Va) oder (Vb)
R¹-[(CR⁶R²-CR⁵R³-O)ₙH]ₘ (Va)
oder
R¹-[(CR⁵R³-CR⁶R²-O)ₙH]ₘ
R¹-[(CHR²-CH(CH₂OR⁴)-O)ₙH]ₘ (Vb)
oder
R¹- [ (CH (CH₂OR⁴) -CHR²-O) ₙHₘ
wobei
R¹ entweder ein Hydroxylrest oder ein mindestens ein Kohlenstoffatom aufweisender Rest ist,
m gleich 1 bis 8 und
n gleich 1 bis 12.000 ist und
R² oder R³, sowie R⁵ oder R⁶ gleich oder auch unabhängig voneinander H oder ein gesättigter oder gegebenenfalls einfach oder mehrfach ungesättigter, gegebenenfalls ein- oder mehrwertiger, auch weiter substituierter Kohlenwasserstoffrest; wobei für die Reste R⁵ und R⁶ gilt, dass sie gleich einem einwertigen Kohlenwasserstoffrest sind, hergestellt werden.

9. Verfahren nach einem der Ansprüche 1 bis 8 zur Herstellung von Polyetheralkoholen der Formeln (Va) oder (Vb)
R¹- [ (CR⁶R²-CR⁵R³-O) ₙHₘ oder R¹- [ (CR⁵R³-CR⁶R²-O) ₙHₘ (Va)
R¹-[(CHR²-CH(CH₂OR⁴)-O)ₙH]ₘ oder R¹-[(CH(CH₂OR⁴)-CHR²-O)ₙH]ₘ (Vb)
sowie deren Gemischen, wobei
R¹ entweder ein Hydroxylrest oder ein mindestens ein Kohlenstoffatom aufweisender Rest ist,
m gleich 1 bis 8 und
n gleich 1 bis 12.000 ist,
durch Polymerisation von Alkylenoxiden der Formel (IIIa) oder (IIIb) 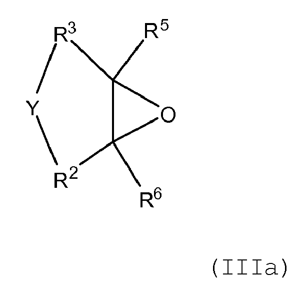 mit
R² oder R³, sowie R⁵ oder R⁶ gleich oder unabhängig voneinander H oder ein gesättigter oder gegebenenfalls einfach oder mehrfach ungesättigter, gegebenenfalls ein- oder mehrwertiger, gegebenenfalls weiter substituierter Kohlenwasserstoffrest, wobei für die Reste R⁵ und R⁶ gilt, dass sie gleich einem einwertigen Kohlenwasserstoffrest sind und der Kohlenwasserstoffrest cycloaliphatisch über das Fragment Y verbrückt sein kann; wobei Y eine Methylenbrücke mit 0, 1 oder 2 Methyleneinheiten sein kann oder Glycidylverbindungen wie Glycidylether und/oder Glycidylester der allgemeinen Formel (IIIb), 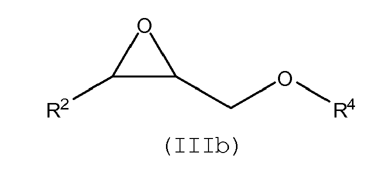 deren mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, an Startverbindungen R¹-H (IV), wobei R¹ entweder ein Hydroxylrest oder ein mindestens ein Kohlenstoffatom aufweisender Rest ist.

10. Verfahren zur Herstellung von Polyetherolen der Formel (Va) oder (Vb) nach zumindest einem der Ansprüche 1 bis 9, **dadurch gekennzeichnet, dass** zumindest einer der beiden Reste R² oder R³ in Formel (IIIa) Wasserstoff ist.

11. Verfahren zur Herstellung von Polyetheralkoholen gemäß zunmindest einem der Ansprüche 1 bis 10, **dadurch gekennzeichnet, dass** Alkylenoxide der Formel (IIIa) oder (IIIb) Ethylenoxid, Propylenoxid, 1,2- oder 2,3-Butylenoxid, Isobutylenoxid, 1,2-Dodecenoxid, Styroloxid, Cyclohexenoxid, Epichlorhydrin, 2,3-Epoxy-1-propanol oder Vinylcyclohexenoxid oder Mischungen davon eingesetzt werden.

12. Verfahren nach zumindest einem der Ansprüche 1 bis 11, **dadurch gekennzeichnet, dass** die so hergestellten Polyetheralkohole mit mittleren Molmassen von unter 8000 g/mol, hergestellt aus Startverbindungen wie Allylalkohol, Hexenol, Butanol, Octanol, Decanol, Dodecanol, Stearylalkohol, 2-Ethylhexanol, Isononanol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan und Glycerin, eine Polydispersität von größer oder gleich 1,2 aufweisen.

13. Verfahren nach zumindest einem der Ansprüche 1 bis 11, **dadurch gekennzeichnet, dass** die so hergestellten höhermolekularem Polyether mit mittleren Molmassen von über 8000 g/mol eine Polydispersität von größer oder gleich 1,4 aufweisen.

14. Zusammensetzung von Polyetheralkoholen der Formeln (Va) oder (Vb)
R¹- [ (CR⁶R²-CR⁵R³-O) ₙHₘ (Va)
oder
R¹-[(CR⁵R³-CR⁶R²-O)ₙH]ₘ
R¹-[(CHR²-CH(CH²OR⁴)-O)ₙH]ₘ (Vb)
oder
R¹- [ (CH (CH₂OR⁴) -CHR²-O) ₙHₘ
sowie deren Gemischen, wobei R¹ entweder ein Hydroxylrest oder einen Rest der organischen Startverbindung darstellt und mindestens ein Kohlenstoffatom aufweisender Rest ist, m gleich 1 bis 8, n gleich 1 bis 12.000, und R² oder R³, sowie R⁵ oder R⁶ gleich oder unabhängig voneinander H oder ein gesättigter oder gegebenenfalls einfach oder mehrfach ungesättigter, gegebenenfalls ein- oder mehrwertiger, gegebenenfalls weiter substituierter Kohlenwasserstoffrest, wobei für die Reste R⁵ und R⁶ gilt, dass sie gleich einem einwertigen Kohlenwasserstoffrest sind und der Kohlenwasserstoffrest cycloaliphatisch sein kann, hergestellt durch ein Verfahren gemäß einem der Ansprüche 1 bis 13, wobei die Polydispersität der Polyetheralkohole höher ist im Vergleich zu einem Polyetheralkohol der ohne Zusatz des Si-H-Additivs unter sonst gleichen Reaktionsbedingungen hergestellt wird.

15. Zusammensetzung von Polyetheralkoholen der Formeln (Va) oder (Vb)
R¹-[(CR⁶R²-CR⁵R³-O)ₙH]ₘ (Va)
oder
R¹-[(CR⁵R³-CR⁶R²-O)ₙH]ₘ
R¹-[(CHR²-CH(CH₂OR⁴)-O)ₙH]ₘ (Vb)
oder
R¹-[(CH(CH₂OR⁴)-CHR²-O)ₙH]ₘ
sowie deren Gemische gemäß Anspruch 14 mit m gleich 1 bis 6 und n gleich 1 bis 800.

16. Herstellung von Polyurethanen unter Verwendung von Polyetheralkoholen der Formeln (Va) und (Vb), erhältlich nach einem Verfahren gemäß den Ansprüchen 1 bis 13.

17. Herstellung von Polyethersiloxanen unter Verwendung von Polyetheralkoholen der Formeln (Va) und (Vb), erhältlich nach einem Verfahren gemäß den Ansprüchen 1 bis 13.

18. Herstellung von oberflächenaktiven Substanzen oder Tensiden unter Verwendung von Polyetheralkoholen der Formeln (Va) und (Vb), erhältlich nach einem Verfahren gemäß den Ansprüchen 1 bis 13.
